# EUROPÄISCHE PATENTSCHRIFT

(11) **EP 3 383 717 B1**
(45) Veröffentlichungstag und Bekanntmachung des Hinweises auf die Patenterteilung: **02.10.2019**
(21) Anmeldenummer: 16791335.9
(22) Anmeldetag: 20.10.2016
(51) Int. Cl.: B62D 1/04, B62D 1/28, B62D 15/02

(54) **ANORDNUNG, FORTBEWEGUNGSMITTEL UND VERFAHREN ZUR ÜBERNAHME EINER FAHRAUFGABE DURCH EINEN INSASSEN EINES IN EINEM HOCHAUTOMATISIERTEN FAHRZUSTAND BEFINDLICHEN FORTBEWEGUNGSMITTELS**
ARRANGEMENT, MEANS OF LOCOMOTION AND METHOD FOR HAVING AN OCCUPANT OF A MEANS OF LOCOMOTION THAT IS IN A HIGHLY AUTOMATED DRIVING MODE TAKE OVER A DRIVING TASK
DISPOSITIF, MOYEN DE LOCOMOTION ET PROCÉDÉ DE PRISE EN CHARGE D'UNE TÂCHE DE DÉPLACEMENT PAR UN PASSAGER D'UN MOYEN DE LOCOMOTION QUI SE TROUVE DANS UN ÉTAT DE DÉPLACEMENT À HAUT NIVEAU D'AUTOMATISATION

(30) Priorität: 30.11.2015 DE 102015223688
(43) Veröffentlichungstag der Anmeldung: 10.10.2018
(73) Patentinhaber: Bayerische Motoren Werke Aktiengesellschaft, 80809 München (DE)
(72) Erfinder: KERSCHBAUM, Philipp, 80339 München (DE); RÜMELIN, Sonja, 81667 München (DE); BOCK, Lucas, 81677 München (DE); GUERRERO, Christian, 80797 München (DE); SCHEIBNER, Annemarie, 81541 München (DE); VU, Phuong-Anh, 80937 München (DE)
(86) Internationale Anmeldenummer: PCT/EP2016/075250
(87) Internationale Veröffentlichungsnummer: WO 2017/092926

(56) Entgegenhaltungen:
- DE-A1-102013 003 187
- DE-A1-102014 226 154
- DE-A1-102015 207 097

## Beschreibung

Die vorliegende Erfindung betrifft eine Anordnung, ein Fortbewegungsmittel sowie ein Verfahren zur Übernahme einer Fahraufgabe durch einen Insassen eines in einem hochautomatisierten Fahrzustand befindlichen Fortbewegungsmittels. Insbesondere betrifft die vorliegende Erfindung eine geeignete haptische Rückmeldung an den Insassen im Ansprechen auf die Wahrnehmung der Fahraufgabe.

Im Stand der Technik werden hochautomatisierte Fahrzustände durch immer besser hierzu geeignete Anordnungen realisiert. Diese Anordnungen umfassen Sensoren und Auswerteeinheiten, mittels welcher Befehle zur Längs- und/oder Querführung von Fortbewegungsmitteln generiert werden, welche den Fahrer bis hin zur vollständigen Anteilnahmslosigkeit am Fahrgeschehen entlasten.

Des Weiteren sind Anpassungsmöglichkeiten auf anthropomorphische Merkmale im Fahrzeug aktuell bei Außenspiegel, Innenspiegel, Lenkradposition und Sitz vorgeschlagen worden. Die Technologie, welche dahintersteckt, beruht auf formveränderlichen Materialien wie z. B. dielektrischen Elastomer-Aktoren (DEA), die sich je nach angelegter Spannung ausdehnen oder reduzieren können. Zusätzlich können diese Materialien zur Ermittlung von Druck verwendet werden. Der Effekt kann durch den Einsatz von Stapelaktuatoren noch vergrößert werden.

EP 2 692 528 A1 offenbart eine Anordnung von Stapelaktuatoren zur Druckerkennung. Hierbei wird jede einzelne Schicht zur Erkennung eines Teils einer Gesamtauslenkung verwendet, sodass sich bei n-Schichten die n-fache Auslenkung ergibt, ohne dass die anderen Betriebsgrößen verändert werden müssen.

Alternativ können Formveränderungen durch Kammern realisiert werden, die mit Luft (vgl. Massagekissen in einem Massagesessel) oder Flüssigkeiten gefüllt werden können bzw. durch magnetorheologische Flüssigkeiten, die durch Anlegen von Spannung in Form gebracht werden können.

DE 10 2006 023 287 A1 und DE 199 27 464 B4 offenbaren Lenkräder für Kraftfahrzeuge mit Drucksensoren zur Entgegennahme von Anwendereingaben.

Das Dokument DE 10 2013 003187 A1 wird als nächstliegender Stand der Technik angesehen und offenbart ein Verfahren zur Übernahme einer Fahraufgabe durch einen Insassen eines in einem hochautomatisierten Fahrzustand befindlichen Fortbewegungsmittels umfassend die Schritte:
- Erkennen, dass der Insasse die Fahraufgabe übernommen hat und im Ansprechen darauf
- automatisches Ansteuern des Lenkrads zur Beeinflussung seiner Haptik.

Ausgehend vom vorgenannten Stand der Technik ist es eine Aufgabe der vorliegenden Erfindung, eine geeignete Rückmeldung an einen Insassen eines Fortbewegungsmittels, welches sich in einem hochautomatisierten Fahrzustand befindet, bezüglich der erfolgreichen Übernahme der Fahraufgabe auszugeben. Die vorstehend identifizierte Aufgabe wird erfindungsgemäß durch ein Verfahren zur Übernahme einer Fahraufgabe durch einen Insassen eines in einem hochautomatisierten Fahrzustand befindlichen Fortbewegungsmittels gelöst. Unter einem "hochautomatisierten Fahrzustand" ("HAF") wird insbesondere ein solcher Fahrzustand verstanden, welcher eine Querführung bzw. Lenkeingriffe durch den Insassen erübrigt. Erfindungsgemäß wird zunächst erkannt, dass der Insasse die Fahraufgabe übernommen hat. Mit anderen Worten wird automatisch erkannt, dass der Fahrer zur Wahrnehmung der Fahraufgabe bereit ist. Im Ansprechen darauf wird automatisch ein formveränderliches Griffelement eines Lenkradkranzes eines Lenkrades des Fortbewegungsmittels zur Beeinflussung dessen Haptik angesteuert. Mit anderen Worten wird eine Formveränderung des Griffelementes im Ansprechen auf ein automatisch erzeugtes Ansteuersignal zugelassen oder sogar vorgenommen. Dies erfolgt insbesondere unabhängig von einer per Muskelkraft induzierten Formveränderung des Lenkradkranzes. Jedoch wird nicht ausgeschlossen, dass die erfindungsgemäße Verformung des Griffelementes mit einer per Muskelkraft zumindest anteilig induzierten Formveränderung einhergeht. Erfindungsgemäß wird also eine haptische Rückmeldung an den Insassen dahingehend ausgegeben, dass die Übergabe der Fahrverantwortung von einem Fahrroboter des Fortbewegungsmittels auf den Fahrer vollständig übergegangen ist. Akustische Ausgaben oder optische Anzeigen bezüglich des erfolgreichen Verantwortungsübergangs erübrigen sich daher, wodurch die Anwenderakzeptanz für entsprechend ausgestaltete Fortbewegungsmittel und Systeme erhöht wird.

Die Unteransprüche zeigen bevorzugte Weiterbildungen der Erfindung.

Das Erkennen, dass der Insasse die Fahraufgabe vollständig übernommen hat, kann im Ansprechen auf ein Ergreifen des Lenkradkranzes erkannt werden. Bspw. kann eine Berührung des Lenkradkranzes sensorisch festgestellt werden. Alternativ oder zusätzlich kann eine optische Erkennung des Greifvorgangs bezüglich des Lenkradkranzes erfolgen. Auf diese Weise erübrigen sich Spracheingaben oder eine Betätigung anderweitiger Schaltflächen zur Äußerung des Übernahmewunsches des Insassen.

Bevorzugt kann das Erkennen, dass der Insasse die Fahraufgabe vollständig übernommen hat, im Ansprechen auf ein Signal eines geeigneten Sensors erfolgen. Bspw. können ein berührungsempfindlicher Sensor (z. B. in den Lenkradkranz integriert) und/oder ein Drucksensor (z. B. in den Lenkradkranz integriert) und/oder ein optischer Sensor (z. B. eine Innenraumkamera) und/oder ein Sprachanalysesystem verwendet werden, um den Wunsch des Anwenders zur Übernahme der Fahraufgabe zu identifizieren. Abgesehen von dem Sprachanalysesystem können die vorgenannten Sensoren auch verwendet werden, um eine Position der Hand des Anwenders bezüglich des Lenkradkranzes zu analysieren und somit Einfluss auf die Formveränderung des Griffelementes zu nehmen.

Das formveränderliche Griffelement kann bspw. in Abhängigkeit einer messtechnischen Erfassung einer Größe und/oder Gestalt einer Hand des Insassen verformt werden. Mit anderen Worten wird die Hand des Insassen sensorisch erfasst, vermessen und eine geeignete Formveränderung des Griffelementes derart herbeigeführt, dass sich die Hand des Anwenders besonders angenehm in eine korrespondiere Form im Lenkradkranz schmiegt. Alternativ oder zusätzlich kann der Insasse sensorisch identifiziert und anschließend einem vorab definierten Datensatz repräsentierend eine Größe und/oder eine Gestalt seiner Hand zugeordnet werden. Der vordefinierte Datensatz kann anschließend dazu verwendet werden, eine geeignete Formveränderung des Griffelementes herbeizuführen, ohne dass eine erneute Vermessung der Hand des Anwenders erforderlich ist. Ein solcher Datensatz kann bspw. in einem Konfigurationsschritt durch den Anwender vordefiniert werden, um das haptische Erlebnis beim Greifen des Lenkradkranzes besonders vorteilhaft und angenehm zu gestalten.

Die Formveränderung des Griffelementes kann bspw. mittels eines elektrorheologischen Fluides und/oder mittels eines magnetorheologischen Fluides, welche in einem formveränderlichen Volumen eingeschlossen sind, ausgestaltet sein. Je nach Wirkprinzip kann vorgesehen sein, ein elektrisches bzw. magnetisches Feld an das Fluid anzulegen, um dessen Formveränderung hervorzurufen bzw. zu ermöglichen. Bspw. kann eine plastische Verformbarkeit des Fluides dadurch erzeugt werden, dass ein zuvor angelegtes Feld abgeschaltet wird. Ergreift in einem solchen Moment der Insasse den Lenkradkranz, formen dessen Hände geeignete Griffmulden in das formveränderliche Griffelement, welche anschließend durch Anlegen eines korrespondierenden Feldes fixiert werden können. Ähnlich können auch ein festkörpermechanischer Aktuator und/oder eine Lufttasche als formveränderliches Griffelement vorgesehen sein, mittels welcher das formveränderliche Griffelement verformt werden bzw. verformbar gemacht werden kann. Selbstverständlich ist eine beliebige Kombination der vorgenannten Wirkprinzipien für das formveränderliche Griffelement verwendbar.

Sofern der Insasse die Fahraufgabe abgeben möchte, kann eine erfolgreiche Erkennung dieser Absicht dadurch quittiert werden, dass ein vor der Übernahme der Fahraufgabe durch den Insassen bestehender Zustand des formveränderlichen Griffelementes des Lenkradkranzes des Lenkrades des Fortbewegungsmittel automatisch wiederhergestellt wird. Bspw. kann im Ansprechen auf ein Loslassen des Lenkradkranzes durch den Insassen ein elektrisches Signal zur Fixierung des formveränderlichen Griffelementes abgeschaltet werden, um eine homogene Fluidverteilung im formveränderlichen Griffelement zu ermöglichen oder eine Grundposition im Falle eines festkörpermechanischen Aktuators im formveränderlichen Griffelement anzufahren. Auf diese Weise erhält der Insasse eine geeignete haptische und/oder optische Rückmeldung über die erfolgreiche Abgabe der Fahraufgabe bzw. die erfolgreiche Übertragung der Fahraufgabe auf das Fortbewegungsmittel. Die Formveränderung des formveränderlichen Griffelementes kann in Abhängigkeit einer tatsächlichen Position einer Hand des Insassen vorgenommen werden. Mit anderen Worten kann das formveränderliche Griffelement an einer solchen Position an die Hand des Anwenders angepasst werden, an welcher der Anwender eine Annäherung an den Lenkradkranz unternimmt oder an welcher der Insasse den Lenkradkranz bereits berührt. Auf diese Weise kann unabhängig von einer durch den Insassen gewählten Griffposition eine im Wesentlichen gleichbleibende haptische Rückmeldung über die Übernahme der Fahraufgabe ausgegeben werden.

Gemäß einem zweiten Erfindungsaspekt wird eine Anordnung für ein Fortbewegungsmittel vorgeschlagen, mittels welcher die Vorteile des erstgenannten Erfindungsaspektes in entsprechender Weise verwirklicht werden können. Die Anordnung umfasst ein Lenkrad (auch "Lenkhandrad") mit einem Lenkradkranz zur Querführung des Fortbewegungsmittels, ein formveränderliches Griffelement im Lenkradkranz zur Beeinflussung der Haptik des Lenkradkranzes und eine Auswerteeinheit, welche einen Signaleingang und einen Signalausgang aufweist. Die Auswerteeinheit kann Bestandteil eines elektronischen Steuergerätes sein und bspw. einen programmierbaren Prozessor umfassen. Die Auswerteeinheit ist eingerichtet, über den Signaleingang zu erkennen, dass ein Insasse des Fortbewegungsmittels die Fahraufgabe aus einem hochautomatisierten Fahrzustand übernommen hat bzw. die Übernahme der Fahraufgabe anstrebt. Im Ansprechen darauf kann die Auswerteeinheit über den Signalausgang das formveränderliche Griffelement zur Beeinflussung der Haptik des Lenkradkranzes des Lenkrades des Fortbewegungsmittels automatisch ansteuern. Somit gibt die erfindungsgemäße Anordnung eine haptische Rückmeldung an den Insassen darüber aus, dass nun er die Verantwortung der Querführung und/oder Längsführung des Fortbewegungsmittels hat.

Gemäß einem dritten Aspekt der vorliegenden Erfindung wird ein Fortbewegungsmittel (z. B. ein Pkw, ein Transporter, ein Lkw, ein Motorrad, ein Luft- und/oder Wasserfahrzeug) vorgeschlagen, welches eine Anordnung gemäß dem zweitgenannten Erfindungsaspekt aufweist. Insbesondere ist das Fortbewegungsmittel mit einem Fahrroboter ausgestattet, mittels dessen wahlweise eine hochautomatisierte Fahrt möglich ist. Die Merkmale, Merkmalskombinationen und die sich aus diesen ergebenden Vorteile entsprechen derart ersichtlich denjenigen, welche in Verbindung mit dem erstgenannten Erfindungsaspekt ausgeführt worden sind, dass zur Vermeidung von Wiederholungen auf die obigen Ausführungen verwiesen wird.

Weitere Einzelheiten, Merkmale und Vorteile der Erfindung ergeben sich aus der nachfolgenden Beschreibung und den Figuren. Es zeigen:
- Figur 1: eine schematische Ansicht eines Ausführungsbeispiels eines erfindungsgemäß ausgestalteten Fortbewegungsmittels mit einem Ausführungsbeispiel einer erfindungsgemäß ausgestalteten Anordnung;
- Figur 2: eine teilweise geschnittene Darstellung eines erfindungsgemäß verwendbaren Lenkrades; und
- Figur 3: ein Flussdiagramm veranschaulichend Schritte eines Ausführungsbeispiels eines erfindungsgemäßen Verfahrens zur Übernahme einer Fahraufgabe durch einen Insassen eines in einem hochautomatisierten Fahrzustand befindlichen Fortbewegungsmittels.

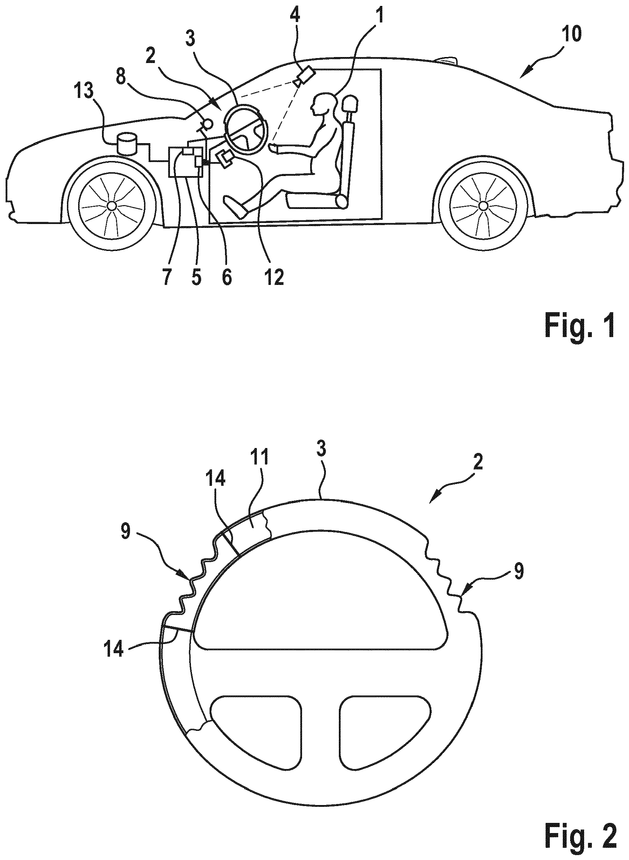

Figur 1 zeigt einen Pkw 10 als Fortbewegungsmittel, welcher ein Ausführungsbeispiel einer erfindungsgemäßen Anordnung aufweist. Ein Lenkrad 2 weist einen Lenkradkranz 3 auf, welcher sich im Erfassungsbereich einer Innenraumkamera 4 befindet. Die Innenraumkamera 4 ist informationstechnisch mit einem Signaleingang 6 eines elektronischen Steuergerätes 5 als Auswerteeinheit verbunden. Ein Mikrofon 8 eines Sprachverarbeitungssystems ist zur Entgegennahme von Sprachbefehlen des Insassen 1 ebenfalls mit dem Signaleingang 6 informationstechnisch verbunden. Über einen Funkschlüssel 12 kann das elektronische Steuergerät 5 den Insassen 1 identifizieren und in einem Datenspeicher 13 gespeicherte vordefinierte Datensätze repräsentierend eine Größe und eine Gestalt einer Hand des Insassen 1 abrufen. Über einen Signalausgang 7 kann das elektronische Steuergerät 5 den Lenkradkranz 3 derart ansteuern, dass zur Beeinflussung der Haptik des Lenkradkranzes 3 geeignete Formveränderungen des Griffelementes (in Figur 1 nicht dargestellt) vorgenommen werden. Eine Position der Hand des Insassen 1 am Lenkradkranz 3 kann über eine berührungsempfindliche Oberfläche (nicht dargestellt) identifiziert und über eine mit dem Signaleingang 6 verbundene Signalleitung dem elektronischen Steuergerät 5 gemeldet werden.

Figur 2 zeigt eine teilweise geschnittene Darstellung eines Ausführungsbeispiels eines erfindungsgemäß verwendbaren Lenkrades 2. Im Lenkradkranz 3 ist ein plastisch verformbares Volumen mit einem elektrorheologischen Fluid als formveränderliches Griffelement 11 vorgesehen. Durch das Anlegen eines geeigneten elektrischen Feldes an die Elektroden 14 innerhalb des Lenkradkranzes 3 können per Muskelkraft erzeugte Griffmulden 9 in der Oberfläche des Lenkradkranzes 3 fixiert bzw. konserviert werden, um dem Insassen eine haptische Rückmeldung über die erfolgreiche Übernahme der Fahraufgabe zu geben.

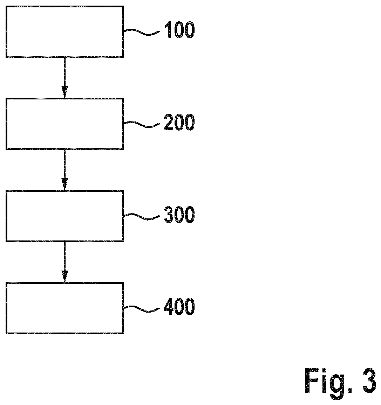

Figur 3 zeigt Schritte eines Verfahrens zur Übernahme einer Fahraufgabe durch einen Insassen. In Schritt 100 wird erkannt, dass der Insasse die Fahraufgabe übernommen hat. Im Ansprechen darauf wird in Schritt 200 ein formveränderliches Griffelement zur Beeinflussung der Haptik des Lenkradkranzes des Lenkrades des Fortbewegungsmittels automatisch angesteuert, um eine Form des Griffelementes zu konservieren. In Schritt 300 wird automatisch erkannt, dass der Insasse die Fahraufgabe abgegeben hat oder abzugeben wünscht und im Ansprechen darauf in Schritt 400 automatisch ein vorheriger Zustand des formveränderlichen Griffelementes des Lenkradkranzes des Lenkrades des Fortbewegungsmittels wiederhergestellt.

Erfindungsgemäß passt sich das Lenkrad also an die Bedürfnisse des Fahrers an. Auf diese Weise kann z. B. der Umfang des zugreifenden Bereichs reduziert oder erhöht bzw. eine Daumenablage stärker oder schwächer ausgeprägt werden. Handdaten können bspw. aus verschiedenen Quellen stammen. So kann bspw. der Fahrer anhand eines Kamerasystems erkannt und mit in einer Datenbank hinterlegten Daten assoziiert werden. Alternativ kann die Handgröße und/oder -form mittels einer im Fahrzeug verfügbaren Kamera (z. B. zur Gestenerfassung oder Müdigkeitserkennung) erfasst werden. Druckdaten können aus zusätzlich integrierten Sensoren stammen oder aber in die Aktuatorik (z. B. bei dielektrischen Polymeren) integriert sein. Sobald die Handgröße und/oder - form erfasst ist, kann das Lenkrad verformt werden, sodass die Hände bequem aufliegen und Lenkradtasten bequem erreichbar sind. Optional findet die Anpassung nur bei Fahrtbeginn/im Stand statt, falls befürchtet wird, dass es durch die Verformung zu einer unerwünschten Ablenkung des Insassen kommen kann. Optional kann bei Einsatz von Drucksensorik im Lenkrad eine Verformung auch bei aktivem Einwirken von Druck erfolgen. Lenkradbereiche, die einer bequemen Ablage der Hände im Wege stehen, erfahren mehr Druck, im Ansprechen worauf diese Bereiche dann reduziert werden können. Optional kann Druck als Eingabeparameter genutzt werden, um den Fahrmodus (manuell vs. automatisiertes Fahren) zu beeinflussen.

Im Ergebnis ermöglicht die vorliegende Erfindung eine Komfortsteigerung, eine Personalisierung und eine Verbesserung der Fahrsicherheit in Verbindung mit hochautomatisierten Fahrzuständen.

### Bezugszeichenliste:

- 1: Insasse
- 2: Lenkrad
- 3: Lenkradkranz
- 4: Innenraumkamera
- 5: elektronisches Steuergerät
- 6: Signaleingang
- 7: Signalausgang
- 8: Mikrofon
- 9: Griffmulde
- 10: Pkw
- 11: formveränderliches Griffelement
- 12: Funkschlüssel
- 13: Datenspeicher
- 14: Elektrode
- 100 - 400: Verfahrensschritte

## Patentansprüche

1. Verfahren zur Übernahme einer Fahraufgabe durch einen Insassen (1) eines in einem hochautomatisierten Fahrzustand befindlichen Fortbewegungsmittels (10) umfassend die Schritte:
- Erkennen (100), dass der Insasse (1) die Fahraufgabe übernommen hat und im Ansprechen darauf
- automatisches Ansteuern (200) eines formveränderlichen Griffelementes (11) zur Beeinflussung der Haptik eines Lenkradkranzes (3) eines Lenkrades (2) des Fortbewegungsmittels (10).

2. Verfahren nach Anspruch 1, wobei das Erkennen, dass der Insasse (1) die Fahraufgabe übernommen hat, im Ansprechen auf ein Ergreifen des Lenkradkranzes (3) erkannt wird.

3. Verfahren nach Anspruch 1 oder 2, wobei das Erkennen, dass der Insasse (1) die Fahraufgabe übernommen hat, im Ansprechen auf ein Signal eines
- berührungsempfindlichen Sensors, und/oder
- Drucksensors und/oder
- optischen Sensors (4) und/oder
- Sprachanalysesystems (8)
erfolgt.

4. Verfahren nach einem der vorstehenden Ansprüche, wobei das formveränderliche Griffelement (11) in Abhängigkeit
- einer messtechnischen Erfassung einer Größe und/oder Gestalt einer Hand des Insassen (1) und/oder
- einer Identifikation des Insassen (1) und eines vordefinierten Datensatzes repräsentierend eine Größe und/oder eine Gestalt der Hand des Insassen (1) angesteuert wird.

5. Verfahren nach einem der vorstehenden Ansprüche, wobei das formveränderliche Griffelement (11)
- ein elektrorheologisches Fluid und/oder
- ein magnetorheologisches Fluid und/oder
- einen festkörpermechanischen Aktuator und/oder
- eine Lufttasche
umfasst.

6. Verfahren nach einem der vorstehenden Ansprüche weiter umfassend
- Erkennen (300), dass der Insasse (1) die Fahraufgabe abgegeben hat und im Ansprechen darauf
- automatisches Wiederherstellen (400) eines vorherigen Zustandes des formveränderlichen Griffelementes (11) des Lenkradkranzes (3) des Lenkrades (2) des Fortbewegungsmittels (10).

7. Verfahren nach einem der vorstehenden Ansprüche wobei die Beeinflussung der Haptik des Lenkradkranzes (3) eine Ausbildung einer Griffmulde (9) umfasst, deren Form insbesondere im Wesentlichen zur Form einer entsprechenden Hand des Insassen (1) korrespondiert.

8. Verfahren nach Anspruch 7, wobei die Griffmulde (9) an einer Position ausgebildet wird, welche durch eine sensorische Ermittlung einer tatsächlichen Position einer Hand des Insassen (1) festgelegt wird.

9. Anordnung für ein Fortbewegungsmittel (10) umfassend
- ein Lenkrad (2) mit einem Lenkradkranz (3),
- ein formveränderliches Griffelement (11) im Lenkradkranz (3), und
- eine Auswerteeinheit (5) mit
- einem Signaleingang (6) und
- einem Signalausgang (7), wobei
- die Auswerteeinheit (5) eingerichtet ist,
- über den Signaleingang (6) zu erkennen, dass ein Insasse (1) des Fortbewegungsmittels (10) die Fahraufgabe aus einem hochautomatisierten Fahrzustand übernommen hat und im Ansprechen darauf
- über den Signalausgang (7) das formveränderliche Griffelement (11) zur Beeinflussung der Haptik des Lenkradkranzes (3) des Lenkrades (2) des Fortbewegungsmittels (10) automatisch anzusteuern.

10. Fortbewegungsmittel umfassend eine Anordnung nach Anspruch 9.

## Claims

1. A method for taking over a driving task by an occupant (1) of a transport means (10) that is in a highly automated driving state, the method comprising the steps of:
- identifying (100) that the occupant (1) has taken over the driving task and, in response to that,
- automatically controlling (200) a deformable grip element (11) to influence the haptics of the rim (3) of a steering wheel (2) of the transport means (10).

2. A method according to claim 1, wherein the identification that the occupant (1) has taken over the driving task is identified in response to the steering wheel rim (3) being gripped.

3. A method according to claim 1 or 2, wherein the identification that the occupant (1) has taken over the driving task is made in response to a signal of
- a touch-sensitive sensor and/or
- a pressure sensor and/or
- an optical sensor (4) and/or
- a speech analysis system (8).

4. A method according to any one of the preceding claims, wherein the deformable grip element (11) is controlled depending on
- a measurement-based detection of the size and/or shape of a hand of the occupant (1) and/or
- an identification of the occupant (1) and of a predefined data set representing the size and/or the shape of the hand of the occupant (1).

5. A method according to any one of the preceding claims, wherein the deformable grip element (11) comprises
- an electrorheological fluid and/or
- a magnetorheological fluid and/or
- a mechanical, solid-body actuator and/or
- an air pocket.

6. A method according to any one of the preceding claims, further comprising
- identifying (300) that the occupant (1) has surrendered the driving task and, in response to that,
- automatically restoring (400) a previous state of the deformable grip element (11) of the rim (3) of the steering wheel (2) of the transport means (10).

7. A method according to any one of the preceding claims, wherein the influencing of the haptics of the steering wheel rim (3) comprises a formation of a grip recess (9), the shape of which corresponds more especially substantially to the shape of a corresponding hand of the occupant (1).

8. A method according to claim 7, wherein the grip recess (9) is formed at a position that is defined by a determination by sensors of an actual position of a hand of the occupant (1).

9. An arrangement for a transport means (10) comprising:
- a steering wheel (2) with a rim (3),
- a deformable grip element (11) in the steering wheel rim (3), and
- an evaluation unit (5) with
- a signal input (6) and
- a signal output (7), wherein
- the evaluation unit (5) is configured
- to identify, through the signal input (6), that an occupant (1) of the transport means (10) has taken over the driving task from a highly automated driving state and, in response to that,
- to automatically control through the signal output (7) the deformable grip element (11) to influence the haptics of the rim (3) of the steering wheel (2) of the transport means (10).

10. Transport means comprising an arrangement according to claim 9.

## Revendications

1. Procédé de prise en charge d'une tâche de conduite par un passager (1) d'un moyen de locomotion (10) se trouvant dans un état de conduite fortement automatisé comprenant des étapes consistant à :
- identifier (100), que le passager (1) a pris en charge la tâche de conduite, et en réponse à cette identification,
- commander automatiquement (200) un élément de préhension (11) pouvant changer de forme pour influencer l'haptique de la couronne (3) du volant (2) du moyen de locomotion (10).

2. Procédé conforme à la revendication 1,
selon lequel l'identification du fait qu'un passager (1) a pris en charge la tâche de conduite est effectuée en réponse à la saisie de la couronne du volant (3).

3. Procédé conforme à la revendication 1 ou 2,
selon lequel l'identification du fait qu'un passager (1) a pris en charge la tâche de conduite est effectuée en réponse à un signal :
- d'un capteur sensible au contact, et/ou
- d'un capteur de pression, et/ou
- d'un capteur optique (4), et/ou
- d'un système d'analyse vocale (8).

4. Procédé conforme à l'une des revendications précédentes,
selon lequel l'élément de préhension (11) pouvant changer de forme est commandé en fonction :
- de la détection par la technique de mesure de la dimension et/ou de la configuration d'une main du passager (1), et/ou
- d'une identification du passager (1) et d'un jeu de données prédéfini représentant la dimension et/ou la configuration de la main du passager (1).

5. Procédé conforme à l'une des revendications précédentes,
selon, lequel l'élément préhension (11) pouvant changer de forme comprend :
- un fluide électrorhéologique, et/ou
- un fluide magnétorhéologique, et/ou
- un actionneur mécanique à corps fixe, et/ou
- une poche d'air.

6. Procédé conforme à l'une des revendications précédentes, comprenant en outre des étapes consistant à :
- identifier (300) que le passager (1) a abandonné la tâche de conduite et, en réponse à cette identification,
- rétablir automatiquement (400) l'état antérieur de l'élément de préhension (11) pouvant changer de forme de la couronne (3) du volant (2) du moyen de locomotion (10).

7. Procédé conforme à l'une des revendications précédentes,
selon lequel l'action sur l'haptique de la couronne (3) du volant comprend la formation d'une poignée encastrée (9) dont la forme correspond en particulier essentiellement à la forme d'une main correspondante du passager (1).

8. Procédé conforme à la revendication 7,
selon lequel la poignée encastrée (9) est formée dans une position qui est déterminée par une évaluation sensorielle de la position réelle d'une main du passager (1).

9. Agencement de moyen de locomotion (10) comprenant :
- un volant (2) ayant une couronne (3),
- un élément de préhension (11) pouvant changer de forme situé sur la couronne (3) du volant, et
- une unité d'exploitation (5) ayant :
- une entrée de signal (6), et
- une sortie de signal (7), dans lequel :
- l'unité d'exploitation (5) est réalisée pour permettre :
- d'identifier par l'intermédiaire de l'entrée de signal (6) qu'un passager (1) du moyen de locomotion (10) a pris en charge la tâche de conduite à partir d'un état de conduite fortement automatisé, et, en réponse à cette identification,
- commander automatiquement par l'intermédiaire de la sortie de signal (7) l'élément de préhension (11) pouvant changer de forme pour influencer l'haptique de la couronne (3) du volant (2) du moyen de propulsion (10).

10. Moyen de propulsion comprenant un agencement conforme à al revendication 9.
